# EUROPÄISCHE PATENTANMELDUNG

(11) **EP 3 719 970 A1**
(43) Veröffentlichungstag der Anmeldung: **07.10.2020**
(21) Anmeldenummer: 19167301.1
(22) Anmeldetag: 04.04.2019
(51) Int. Cl.: H02K 5/18, H02K 7/11, H02K 9/06, H02K 9/14, H02K 11/33

(54) **ANTRIEBSEINHEIT MIT EINER INNENKÜHLUNG EINES ELEKTRONISCHEN ANBAUTEILS**

(71) Anmelder: Siemens Aktiengesellschaft, 80333 München (DE)
(72) Erfinder: Deeg, Christian, 90518 Altdorf (DE); Kuhn, Harald, 90491 Nürnberg (DE); Maidorn, Mischa, 90547 Stein (DE); Mächtel, Stefan, 91334 Hemhofen-Zeckern (DE); Tischmacher, Hans, 91207 Lauf (DE)

(57) **Zusammenfassung**

Die Erfindung betrifft einen Antrieb (1) mit
- zumindest einer dynamoelektrischen rotatorischen Maschine (2),
- zumindest einem elektronischen Anbauteil (13),
- zumindest einer Kühleinheit (15),
- wobei diese Komponenten axial hintereinander angeordnet sind, indem das elektronische Anbauteil (13) zwischen dynamoelektrischer rotatorischer Maschine (2) und der Kühleinheit (15) angeordnet ist,
- wobei zusätzlich zumindest ein Innenlüfter (20) innerhalb des elektronischen Anbauteil (13) vorgesehen ist.

## Beschreibung

Die Erfindung betrifft eine Antriebseinheit mit einer dynamoelektrischen Maschine zumindest einem elektronischen Anbauteil und zumindest einer Kühleinheit.

Derartige Antriebseinheiten sind beispielsweise aus der DE 198 12 729 A1 bekannt. Die Erfindung beschreibt einen Elektromotor, insbesondere mit einem Lüfterrad zur Bildung eines Axial- oder Radiallüfters, mit einer Antriebseinheit und einer ein Steuerungsgehäuse aufweisenden Steuereinheit, wobei die Antriebseinheit einen Stator, einen Läufer und zumindest eine elektrische Spule aufweist und wobei die Steuereinheit eine elektronische Schaltung zur Steuerung oder Regelung der Stromzufuhr zur Spule aufweist. Die Antriebseinheit und die Steuereinheit sind durch Module gebildet und einander zugeordnete Kontaktelemente sind zur gegenseitigen elektrischen Verbindung vorgesehen.

Ebenso ist eine derartige Anordnung aus der DE 38 42 588 A1 bekannt. Die Erfindung beschreibt einen kollektorlosen Gleichstrom-Außenläufermotor, der aus einem an einem Motorflansch befestigten Stator mit Statorwicklungen, einem den Stator auf seiner dem Motorflansch abgekehrten Seite umschließenden Außenläufer sowie einer elektronischen, die Statorwicklungen ansteuernden Schaltungsanordnung besteht. Diese Schaltungsanordnung besitzt eine flanschseitig dem Stator zugekehrten angeordnete, elektronischen Bauelemente tragende Leiterplatte sowie mehrere an der Leiterplatte elektrisch angeschlossene, in wärmeleitendem Kontakt mit dem Motorflansch angeordnete Leistungshalbleiter. Die Leistungshalbleiter sind mittelbar über einen ringscheibenförmigen Kühlkörper mit dem Motorflansch wärmeleitend verbunden. Der Kühlkörper bildet mit der Leiterplatte und einem die Leiterplatte halternden Trägerelement eine vormontierte Baugruppe. Ausgehend davon liegt der Erfindung die Aufgabe zugrunde, eine kompakte Antriebseinheit zu schaffen, die eine ausreichende Kühlung der Antriebseinheit gewährleistet.

Die Lösung der gestellten Aufgabe gelingt durch einen Antrieb mit
- zumindest einer dynamoelektrischen rotatorischen Maschine,
- zumindest einem elektronischen Anbauteil,
- zumindest einer Kühleinheit,
- wobei diese Komponenten axial hintereinander angeordnet sind, indem das elektronische Anbauteil zwischen dynamoelektrischer rotatorischer Maschine und der Kühleinheit angeordnet ist,
- wobei zusätzlich zumindest ein Innenlüfter innerhalb des elektronischen Anbauteils vorgesehen ist.

Erfindungsgemäß wird nunmehr das elektronische Anbauteil je nach Ausführung stets zusätzlich oder bedarfsweise zusätzlich gekühlt. Der Innenlüfter ist also entweder zuschaltbar oder ist direkt mit einer Wellenumdrehung gekoppelt.

Vorzugsweise wird der Innenlüfter elektrisch angetrieben.

Dabei kann der Innenlüfter die Antriebsenergie dem Drehfeld der dynamoelektrischen rotatorischen Maschine, insbesondere dessen Oberschwingungen entnehmen. Dabei sind dementsprechende Antennen innerhalb der Antriebseinheit angeordnet und ausgeformt, so dass sie Energie der elektromagnetischen Strahlung - also insbesondere den Oberschwingungen des Luftspaltfeldes auffangen. Diese Energie ist energetisch verwendbar, in diesem Fall als Antrieb des Innenlüfters.

Der Antrieb des Innenlüfters kann auch über eine magnetische Kopplung von positionierten Magneten auf Welle und innerhalb des elektronischen Anbauteils an einer Nabe des Innenlüfters innerhalb des Anbauteils, erfolgen.

Damit ergibt sich ein sehr kompakter und leistungsfähiger Antrieb, der durch die Kühlmittel, einer Basiskühleinheit, also dem Eigenlüfter des Antriebs und dem Innenlüfter des elektronischen Anbauteils, insbesondere die Komponenten der dynamoelektrischen rotatorischen Maschine, wie Stator und Rotor, aber auch vor allem die Komponenten des elektronischen Anbauteils, wie Leistungs- und Steuerelektronik kühlt.

Dabei wird der Rotor u.a. auch über die Welle gekühlt. Außerdem wird Wärme des Rotors auch an den Innenraum der dynamoelektrischen rotatorischen Maschine abgegeben, sodass sich die Lagerschilde, Lager und Gehäuse dadurch ebenfalls erwärmen können. Dieser Wärmeeintrag wird durch die das Gehäuse und die Lagerschilde umströmende Luft, insbesondere durch die den Kühlluftstrom generierenden adaptierbaren Kühleinheiten abgeführt.

Der Stator erzeugt ebenso Wärme, die u.a. den Innenraum der dynamoelektrischen rotatorischen Maschine aufheizt. Dieser Wärmeeintrag wird ebenfalls durch die das Gehäuse und die Lagerschilde umströmende Luft abgeführt. Des Weiteren ist der Stator vorzugsweise in ein Gehäuse eingeschrumpft, um einen vergleichsweise guten Wärmeübergang vom Blechpaket des Stators auf das Gehäuse und die Gehäuserippen zu erhalten.

Die Erfindung sowie weitere vorteilhafte Ausgestaltungen der Erfindung werden anhand prinzipiell dargestellter Ausführungsbeispiele näher dargestellt; darin zeigen:
- FIG 1: einen prinzipiellen Längsschnitt eines erfindungsgemäßen Antriebs,
- FIG 2,3: Längsschnitt eines Antriebs mit einem Innenlüfter des elektronischen Anbauteils,
- FIG 4,5: Querschnitt eines Antriebs mit einem Innenlüfter des elektronischen Anbauteils.

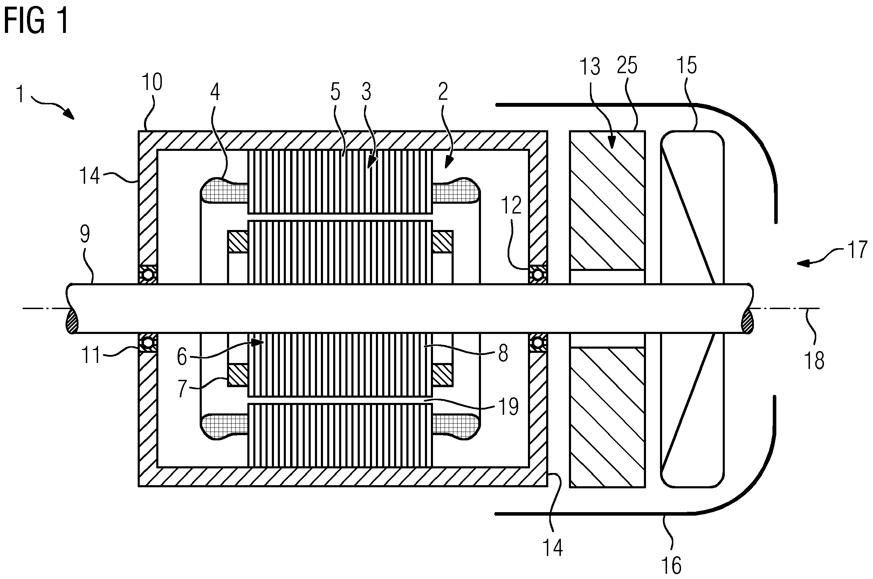

FIG 1 zeigt zunächst grundsätzlich einen erfindungsgemäßen Antrieb 1 mit einer dynamoelektrischen rotatorischen Maschine 2, die einen Stator 3 aufweist, der ein Blechpaket 5 hat. In dem Blechpaket 5 des Stators 3 sind Nuten einem Luftspalt 19 zugewandt, in denen ein Wicklungssystem angeordnet ist, das an den Stirnseiten des Blechpakets 5 des Stators 3 Wickelköpfe 4 ausbildet. Drehfest mit einer Welle 9 ist ein Blechpaket 8 eines Rotors 6 verbunden, das in elektromagnetischer Wechselwirkung mit einem bestromten Wicklungssystem des Stators 3 steht und so zu einer Rotation der Welle um eine Achse 18 führt.

Die Welle 9 ist in zwei Lagern gehalten, einem AS-Lager 11 und einem BS-Lager 12. Die dynamoelektrische rotatorische Maschine 2 ist von einem Gehäuse 10 umgeben, das an den Stirnseiten von Lagerschilden 14 begrenzt ist. Axial von der BS-Seite beabstandet, befindet sich ein elektronisches Anbauteil 13, das zumindest Komponenten eines Umrichters oder Stellers beinhaltet. Das elektronische Anbauteil 13 ist ortsfest und nicht mit der Welle 9 drehfest verbunden. Axial daran schließt sich ein Lüfter 15 an, der wiederum drehfest mit einer Welle 9 verbunden ist und einen Kühlluftstrom generiert, der durch eine Lüfterhaube 16 geführt wird. Der Luftstrom wird über eine Ansaugöffnung 17 dem Lüfter 15 zugeführt. Dieser Lüfter 15 bildet eine Basiskühlung des Antriebs 1.

Bei dem Antrieb 1, insbesondere zwischen dem elektronischen Anbauteil 13 und dem zugewandten Lagerschild 14 im Betrieb des Antriebs 1 tritt normalerweise ein Wärmestau ein. Der Wärmeeintrag erfolgt dabei von beiden axialen Seiten. So führt Verlustwärme aus dem Umrichter oder Steller, als auch Wärme aus der Maschine 2 über das Lagerschild 14 zu diesem Wärmestau. Die Wärme aus der Maschine 2 setzt sich u.a. aus der Verlustwärme von Stator 2 und Rotor 6 zusammen. Diese heizt zusätzlich das benachbarte Lager 12 auf, was den Schmierstoff der Lager 11, 12 beeinträchtigt und zu verkürzten Nachschmierfristen führt.

Die Wärme wird auch über die Welle 9, insbesondere aus dem Rotor 6 der dynamoelektrischen rotatorischen Maschine 2 transportiert und dem Lüfter 15 zugeführt, der als Wärmeabgabeelement fungiert, das zusätzlich im Betrieb der dynamoelektrischen rotatorischen Maschine 2 einen Kühlluftstrom erzeugt.

In der Welle 9 ist dabei ein Material enthalten, das thermisch besonders leitfähig ist. Ebenso ist der Wärmeübergang von der Welle 9 zum Lüfter 15 mittels geeigneter Materialen ebenso thermisch günstig ausgelegt.

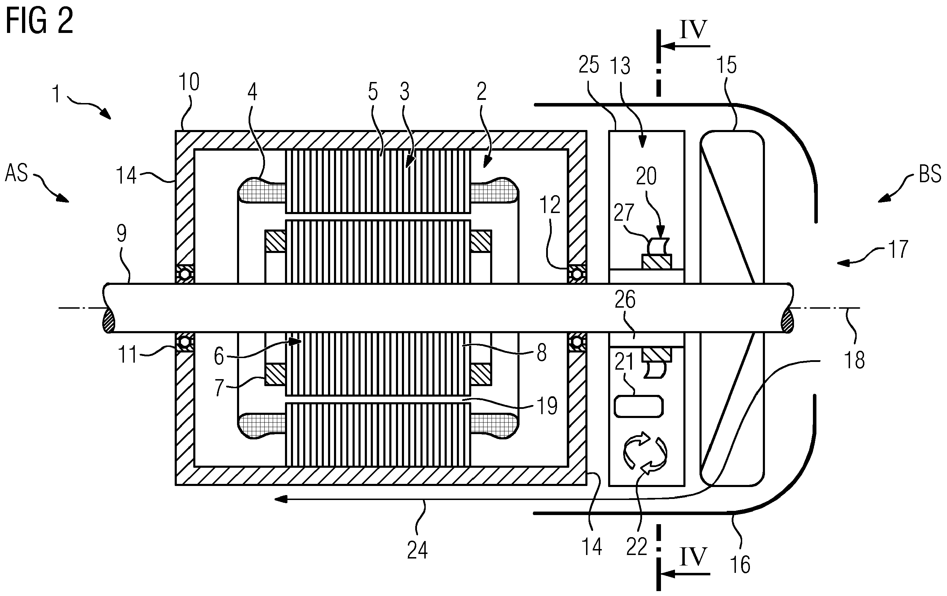

Der Antrieb 1 weist nun erfindungsgemäß - wie in FIG 2 gezeigt - einen Innenlüfter 20 im elektronischen Anbauteil 13 auf, der innerhalb des geschlossenen elektronischen Anbauteils 13 zu einem Innenkühlkreislauf 22 führt. Der Innenlüfter 20 ist dabei entweder separat als Fremdlüfter temperaturabhängig ansteuerbar, oder magnetisch mit der Welle 9 gekoppelt so dass eine Art Eigenbelüftung des elektronischen Anbauteils 13 vorliegt, sobald sich die Welle 9 dreht.

Der Innenlüfter 20 entnimmt somit die Antriebsenergie dem Drehfeld der dynamoelektrischen rotatorischen Maschine 2, insbesondere dessen Oberschwingungen. Dabei sind dementsprechende Antennen innerhalb des Antriebs angeordnet und ausgeformt, so dass sie Energie der elektromagnetischen Strahlung - also insbesondere den Oberschwingungen des Luftspaltfeldes auffangen. Diese aufgenommene Energie wird als Antrieb des Innenlüfters 20 verwendet. Die Antennen sind dabei innerhalb des elektronischen Anbauteils 13 und/oder zwischen elektronischem Anbauteil 13 und dynamoelektrischer rotatorischer Maschine 2, insbesondere im Bereich der Welle 9 angeordnet.

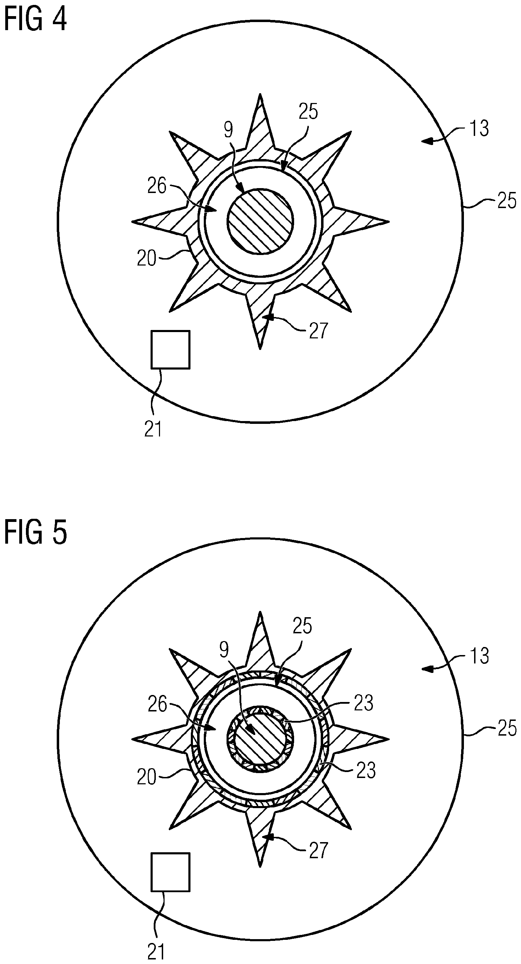

FIG 4 zeigt in einem prinzipiellen Querschnitt, die Anordnung des Innenlüfter 20 innerhalb des elektronischen Anbauteils 13. Die Welle 9 weist von den Wandungen der Gehäuseanordnung 25 eine Abstand 26 auf. Die Gehäuseanordnung 25 ist stationär. Der Innenlüfter 20 weist eine Vielzahl von radial angestellten Flügeln 27 auf, die einen Luftstrom innerhalb der Gehäuseanordnung des elektronischen Anbauteils 13 umwälzen.

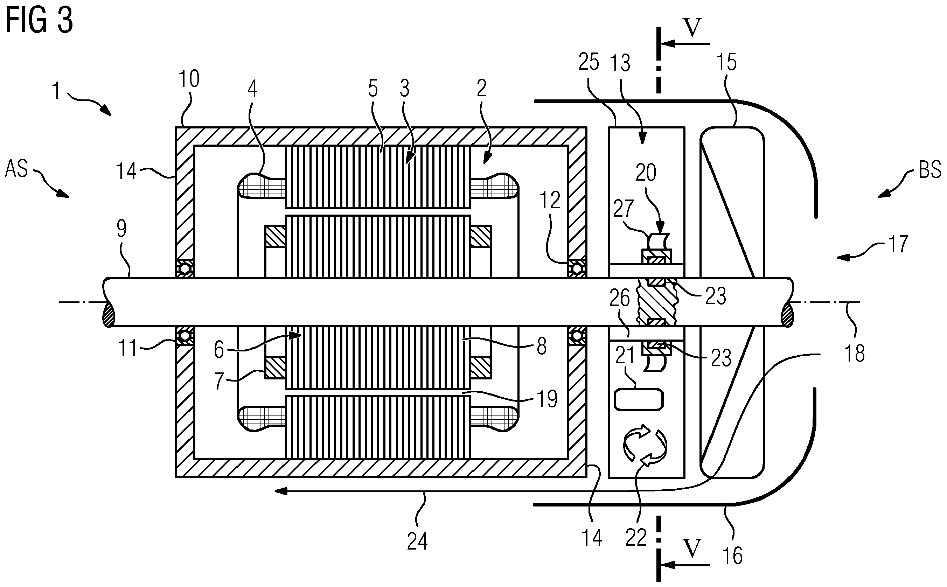

Der Antrieb des Innenlüfters 20 kann alternativ gemäß FIG 3 auch über eine magnetische Kopplung von auf der Welle 9 positionierten Magneten 23 und dementsprechend angeordneten Magneten 23 innerhalb des elektronischen Anbauteils 13 erfolgen.

FIG 5 zeigt diese Anordnung in einem prinzipiellen Querschnitt. Der Innenlüfter 20 ist innerhalb der Gehäuseanordnung 25 des elektronischen Anbauteils 13. Die Welle 9 ist von den Wandungen der Gehäuseanordnung 25 mit einem Abstand 26 versehen und weist in diesem axialen Abschnitt - gegenüberliegend der Gehäuseanordnung 25 - außen liegende Magnete 23 auf. Diese Magnete 23 bewirken im Betrieb der dynamoelektrischer rotatorischer Maschine 2 über Magnete 28 in der Nabe des Innenlüfters 20 eine Rotation des Innenlüfters 20. Die Gehäuseanordnung 25 ist stationär. Der Innenlüfter 20 weist eine Vielzahl von radial angestellten Flügeln 27 auf, die einen Luftstrom innerhalb der Gehäuseanordnung des elektronischen Anbauteils 13 umwälzen.

Die Innenlüfter 20 sind dabei bei jeder Ausführungsform innerhalb des stationären Anbauteils 13 drehbar gelagert.

Die Isttemperatur wird dabei jeweils über ein Temperaturmodell und/oder einen oder mehrere Temperatursensoren in der dynamoelektrischen rotatorischen Maschine 2 und/oder dem elektronischen Anbauteil 13 ermittelt.

Durch die beiden Lüfter 15, 20 kann auch zumindest zeitweise auch ein Redundanzbetrieb des Antriebs 1 aufrechterhalten werden, sofern einer der beiden Lüfter 15, 20 ausfallen sollte.

Zumindest sorgt der Innenlüfter 20 für eine Vergleichmäßigung der innerhalb der Gehäuseanordnung 25 anfallenden Wärme von Leistungs- und Steuerelektronik. Somit ist eine verbesserte Wärmeabfuhr durch den äußeren Kühlluftstrom 24 u.a. an der Gehäuseanordnung 25 gegeben. Sei es an den radial äußeren Rändern, zwischen elektronischem Anbauteil 13 und Lagerschild der dynamoelektrischen Maschine 2, als auch zwischen dem radial inneren Rand der Gehäuseanordnung 25 und der Welle 9.

Vorteilhaft ist dabei außerdem, wenn diese elektronischen Bauteile 21 direkt mit der Wandung der Gehäuseanordnung 25 in wärmeleitendem Kontakt stehen, um so eine zusätzliche Kühlung durch den äußeren Kühlluftstrom 24 zu erhalten.

Der Antrieb 1 bzw. die Antriebseinheit ist grundsätzlich kompakt aufgebaut. Dabei können die folgenden Merkmale einzeln oder in beliebiger Kombination zur Gestaltung des Antriebs 1 angezogen und zusammengestellt werden. Dabei soll der kompakte Antrieb 1 u.a. bestmöglich gekühlt werden.

Dazu wird an die dynamoelektrische rotatorische Maschine 2 axial zumindest ein elektronisches Anbauteil 13 oder Komponenten bzw. elektronische oder elektrische Bauteile 21 davon, wie ein oder mehrere Leistungshalbleiter, Drosseln, Kondensatoren und Regelungsbausteine, vorgesehen. Diese Komponenten des elektronischen Anbauteils 13 sind in einer geschlossenen Gehäuseanordnung 25 angeordnet. Eine Kühlung des Antriebs 1 und seiner jeweiligen Abschnitte/Teile erfolgt durch eine oder mehrere Kühleinheiten, die als Flüssigkeitskühlung (Kühlmantel an Gehäuseanordnung 25 und/oder am Gehäuse 10 der dynamoelektrische rotatorische Maschine 2) realisiert werden kann. Vorzugsweise wird eine Luftkühlung vorgesehen, deren Lüfter 15 an der der dynamoelektrischen rotatorischen Maschine 2 abgewandten Seite der Gehäuseanordnung 25 liegt, so dass eine axiale Reihenfolge von Lüfter, Gehäuseanordnung 25 und dynamoelektrischer rotatorischer Maschine 2 vorliegt.

Der Lüfter 15 kann auch als eine Lüftereinheit aus einem oder mehreren Eigen- oder auch Fremdlüftern aufgebaut sein, die auch zumindest teilweise an oder in einer Lüfterhaube integriert sein können.

Zur Verbesserung des Kühleffekts sind oberflächenvergrößernde Maßnahmen an der Gehäuseanordnung 25 und/oder dem Gehäuse 10 der dynamoelektrischen rotatorischen Maschine 2 vorgesehen. Dabei sind dort Rippen, Noppen oder zusätzliche Wärmekapazitäten in Form von Gehäuseerweiterung vorgesehen, die Wärmelasten bei dementsprechendem Betrieb des Antriebs 1 puffern können.

Außerdem wird durch spezielle Gestaltung bzw. Aussparungen zwischen dynamoelektrischer rotatorischer Maschine 2, insbesondere deren Lagerschild und der Gehäuseanordnung 25 Kühlkanäle geschaffen, die durch dementsprechende Gestaltung und einem Hauptluftstrom einen zur Kühlung betragenden Venturieffekt in den Aussparungen erzielen.

Die Gehäuseanordnung 25 kann dabei auch trichterförmig ausgebildet, wobei der Trichter einen zylindrischen Abschnitt und einen axial verjüngenden Abschnitt aufweist, die einstückig aus gleichem Material, aus mehreren Teilen mit unterschiedlichen Materialien und aus mehreren Teilen mit gleichem Material ausgeführt sein kann.

Um die Oberfläche der Gehäuseanordnung 25 zu vergrößern weist der zylindrische Abschnitt und/oder der sich axial verjüngenden Abschnitt an seiner Außenseite axial bzw. quasi-radial erstreckende Rippen auf.

Die Innenseite des zylindrischen Abschnitts und/oder des sich axial verjüngenden Abschnitt ist polygonal ausgeführt, um Steller- oder Umrichterkomponenten direkt an der Innenseite der Gehäuseanordnung 25 anordnen zu können. Damit wird eine vergleichsweise thermisch gute Anbindung gewährleistet.

Die Steller- oder Umrichterkomponenten können insbesondere auch ausschließlich im zylindrischen Abschnitt angeordnet sein, in diesem Fall wirkt der sich axial verjüngenden Abschnitt 26 als Wärmekapazität, der eine thermisch puffernde Wirkung aufweist. Dieser Abschnitt 26 ist dann als Vollmaterial ausgeführt, der gleichzeitig für den Lüfter 15 die Funktion einer Deckscheibe erfüllt. Damit können axial kürzere Lüfter 15 eingesetzt werden, um so eine kompaktere Bauweise des Antriebs zu erhalten.

Ebenso ist es möglich im elektronischen Anbauteil 13 eine oder mehrere Innenlüfter vorzusehen, die innerhalb des geschlossenen elektronischen Anbauteils 13 zu einem Innenkühlkreislauf 22 führen. Der Innenlüfter 20 ist dabei entweder separat als Fremdlüfter temperaturabhängig ansteuerbar, oder magnetisch mit der Welle 9 gekoppelt, so dass eine Art Eigenbelüftung des elektronischen Anbauteils 13 vorliegt, sobald sich die Welle 9 dreht.

Der Antrieb des Innenlüfters erfolgt über eine magnetische Kopplung von auf der Welle 9 positionierten Magneten 23 und dementsprechend angeordneten Magneten innerhalb des elektronischen Anbauteils 13 beispielsweise auf einer Nabe des Innenlüfters 20.

Alternativ kann der Innenlüfter 20 seine Antriebsenergie auch dem Drehfeld der dynamoelektrischen rotatorischen Maschine 2, insbesondere dessen Oberschwingungen entnehmen.

Die elektrische Antriebsenergie des Innenlüfter 20 kann auch direkt den Steller- oder Umrichterkomponenten innerhalb des elektronischen Anbauteils 13 entnommen werden.

Die Innenlüfter 20 sind dabei bei jeder Ausführungsform innerhalb des stationären Anbauteils 13 drehbar gelagert.

Die Isttemperatur wird dabei jeweils über ein Temperaturmodell und/oder einen oder mehrere Temperatursensoren in der dynamoelektrischen rotatorischen Maschine 2 und/oder dem elektronischen Anbauteil 13 ermittelt.

Durch die beiden Lüfter 15, 20 kann auch zumindest zeitweise auch ein Redundanzbetrieb des Antriebs 1 aufrechterhalten werden, sofern einer der beiden Lüfter 15, 20 ausfallen sollte.

Zur Regelung kann der Antrieb 1 auch eine Regeleinheit aufweisen, die Daten unterschiedlichster Sensoren u.a. Temperatursensoren, Schwingungssensoren, Schallsensoren erhält. Die Temperatursensoren sind bei diesem Antrieb 1 an den relevanten Einbauorten angeordnet. So sind Temperatursensoren für die Außenluft, für das elektronische Anbauteil 13, der Leistungshalbleiter im elektronischen Anbauteil 13, für das oder die Lager 11,12, für das Wicklungssystem und/oder den Wickelkopf 4, für den Innenraum der Maschine 2, als auch für das Gehäuse 10 und die Umgebung vorgesehen.

Sensoren, die in dem Antrieb 1, also der Maschine 2 und/oder dem elektronischen. Anbauteil 13 vorgesehen werden, sind kabelgebunden oder kabellos mit einer Regeleinheit verbunden, die in der elektronischen Anbaueinheit 13 oder am Gehäuse 10 der Maschine 2, insbesondere in einem Klemmenkasten oder in der Maschine 2 angeordnet ist.

Schwingungssensoren sind an der Welle 9 und oder Gehäuse 10 angebracht. Schallsensoren sind vor allem an schallemittierenden Quellen, wie z.B. Rippen oder Lagerschilden 14 vorgesehen. Des Weiteren sind Drehzahlsensoren zur Regelung des Antriebs 1 vorhanden.

Aus all diesen Daten regelt bzw. steuert die Regeleinheit u.a. die Drehzahl des oder der Fremdlüfters und/oder die Taktfrequenz des Umrichters. D.h. bei besonders hohen Außentemperaturen und/oder geringer Drehzahl der Welle 9 wird der Fremdlüfter temperaturabhängig zugeschaltet. Dabei ist auch die Drehzahl und damit der Volumenstrom des Fremdlüfters 26 steuer- bzw. regelbar.

Die Isttemperatur vorzugsweise des gesamtem Antriebs 1 wird dabei über einen oder mehrere der oben aufgeführten Temperatursensoren erfasst. Zusätzlich ist es möglich über ein Temperaturmodell die erfassten Werte zu verifizieren bzw. über vorgegebene in der Regeleinheit und/oder einer Cloud (beispielsweise über einen digitalen Zwilling) hinterlegte Algorithmen Temperaturen der Antriebskomponenten zu ermitteln, die nicht mit Sensoren versehen sind.

Damit ist ein energieeffizienter Betrieb des Antriebs 1 durchzuführbar und Wartungsintervalle des Antriebs 1 und dessen Komponenten sind außerdem besser planbar, wie z.B. Nachschmierfristen der Lager.

Die Sensoren sind dabei Schwingungssensoren, Temperatursensoren, Feuchtigkeitssensoren etc. Vorteilhafterweise übermitteln die Sensoren, ihre Daten leitungsgebunden oder über drahtlose Verbindungen an die Regeleinheit. Die Daten werden entweder durch direkten Kontakt oder optisch (beispielsweise Infrarot-Temperaturmessung) erfasst.

Die Regeleinheiten unterschiedlicher Antriebe 1 können auch über eine Cloud in Kontakt stehen und dabei vorgebbare Daten ihrer Antriebe austauschen.

Damit ergibt sich ein sehr kompakter und leistungsfähiger Antrieb 1, der aufgrund der Regeleinheit einen thermisch und/oder energieeffizienten Betrieb des Antriebs 1 gewährleistet. Dabei greift die Regeleinheit in die Taktfrequenz, den Aussteuergrad und/oder den Steuerwinkel eines Umrichters des elektronischen Anbauteils ein, ebenso wie beispielsweise in die Drehzahl eines Fremdlüfters. Damit ergibt sich im Hinblick auf thermische grenzen und/oder Energieeffizienz des Antriebs 1 eine optimale und aussteuerbare Verlustaufteilung zwischen den Komponenten der dynamoelektrischen Maschine 2 und den elektronischen Anbauteilen 13. Mittels der Kühleinheiten, zumindest einer Basiskühleinheit, einer Eigenbelüftung 15 und/oder einer Boosterkühleinheit, die insbesondere die Komponenten der dynamoelektrischen rotatorischen Maschine 2, wie Stator und Rotor, als auch die elektronischen Anbauteile 13, wie Leistungs- und Steuerelektronik, Regeleinheit etc. kühlt, wird somit auch ein thermisch steuer- bzw. regelbarer optimaler Betrieb des Antriebs 1 gewährleistet. Beispielsweise führen bestimmte Einstellungen der Taktfrequenz des Umrichters zu geringeren Verlusten im Umrichter, aber erhöhen die Verluste in der dynamoelektrischen Maschine 2. Umgekehrt können thermisch günstige Einstellungen für die dynamoelektrische Maschine 2 den Umrichter thermisch stärker belasten. Je nachdem welches dieser Teilsysteme des Antriebs 1 noch thermische Reserven aufweist, kann über die Regeleinheit 27 der Umrichter dementsprechend eingestellt werden. Zusätzlich kann die Regeleinheit 27 auch in die Kühlung eingreifen, indem beispielsweise ein oder mehrere Fremdlüfter des Antriebs 1 zu- oder abgeschaltet werden oder mit dementsprechender Drehzahl betrieben werden.

## Patentansprüche

1. Antrieb (1) mit
- zumindest einer dynamoelektrischen rotatorischen Maschine (2),
- zumindest einem elektronischen Anbauteil (13),
- zumindest einer Kühleinheit (15),
- wobei diese Komponenten axial hintereinander angeordnet sind, indem das elektronische Anbauteil (13) zwischen dynamoelektrischer rotatorischer Maschine (2) und der Kühleinheit (15) angeordnet ist,
- wobei zusätzlich zumindest ein Innenlüfter (20) innerhalb des elektronischen Anbauteil (13) vorgesehen ist.

2. Antrieb (1) nach Anspruch 1, **dadurch gekennnzeichnet**, dass der Innenlüfter (20) elektrisch antreibbar ist.

3. Antrieb (1) nach Anspruch 2, **dadurch ge**- **kennnzeichnet**, dass der Innenlüfter (20) die Antriebsenergie dem Drehfeld der dynamoelektrischen rotatorischen Maschine (2), insbesondere dessen Oberschwingungen entnimmt.

4. Antrieb (1) nach Anspruch 2, **dadurch ge**- **kennnzeichnet**, dass der Antrieb des Innenlüfters (20) über eine magnetische Kopplung von positionierten Magneten (23) auf einer Welle (9) und innerhalb des elektronischen Anbauteils (13) erfolgt.

5. Antrieb (1) nach einem der vorhergehenden Ansprüche, **dadurch gekennzeichnet, dass** die dynamoelektrische rotatorische Maschine (2) in einem Gehäuse (10) angeordnet ist, insbesondere eingeschlossen ist, wobei das Gehäuse (10) Rippen aufweist, an denen ein von der Kühleinheit (15) erzeugter Kühlluftstrom (24) zumindest abschnittsweise entlang geführt ist.

6. Antrieb (1) nach Anspruch 3, **dadurch gekenn-zeichnet**, dass eine Lüfterhaube (16) als Leitvorrichtung des Kühlluftstroms dient, die sich insbesondere bis ca. 30% über die axiale Länge des Gehäuses (10) der dynamoelektrischen rotatorischen Maschine (2) ausgehend von der BS-Seite erstreckt.

7. Antrieb (1) nach einem der vorhergehenden Ansprüche, **dadurch gekennzeichnet, dass** das elektronische Anbauteil (13) Komponenten aufweist, die sich in einer geschlossenen Gehäuseanordnung (25) befinden und die als Steller oder Umrichter ausgeführt sind.

8. Antrieb (1) nach Anspruch 7, **dadurch gekennzeichnet, dass** eine Drossel des Stellers oder Umrichters am und/oder um das Gehäuse (10) der dynamoelektrischen rotatorischen Maschine (2) angeordnet ist.
